# FASCICULE DE BREVET EUROPEEN

(11) **EP 3 177 895 B1**
(45) Date de publication et mention de la délivrance du brevet: **09.10.2019**
(21) Numéro de dépôt: 14780593.1
(22) Date de dépôt: 07.08.2014
(51) Int. Cl.: G01D 7/00

(54) **DISPOSITIF INDICATEUR, NOTAMMENT MANOMÈTRE**
ANZEIGEVORRICHTUNG, INSBESONDERE EIN DRUCKMESSER
INDICATING DEVICE, IN PARTICULAR A PRESSURE GAUGE

(43) Date de publication de la demande: 14.06.2017
(73) Titulaire: ASCO SAS, 28110 Lucé (FR)
(72) Inventeur: SOLET, Daniel, F-28170 Saint Sauveur Marville (FR); LONGPRE, Gonzague, F-28110 Luce (FR)
(74) Mandataire: Nony
(86) Numéro de dépôt international: PCT/IB2014/063776
(87) Numéro de publication internationale: WO 2016/020725

(56) Documents cités:
- DE-A1- 19 530 023
- DE-U1- 20 021 111
- FR-A1- 3 008 790
- US-A- 1 723 390
- US-A- 2 501 033
- US-A- 2 550 033

## Description

La présente invention concerne un dispositif indicateur, notamment manomètre, comportant un boîtier de base comportant un mécanisme d'entraînement d'une aiguille rotative indicatrice, mobile par rapport à un cadran.

Il a été proposé de munir de tels dispositifs indicateurs d'un moyen d'indication de zones de fonctionnement.

La demande DE19530023 A1 divulgue un dispositif indicateur dans lequel le boîtier de base porte deux curseurs mobiles qui peuvent être déplacés relativement au cadran pour signaler des limites de zones de fonctionnement.

La demande EP 1 215 478 A2 divulgue un dispositif indicateur comportant un couvercle se fixant sur le boîtier de base, ce couvercle étant réalisé avec un axe de maintien sur lequel peuvent se fixer deux écrans rotatifs. Un inconvénient de ce dispositif indicateur est que le réglage des écrans se fait sans visualiser les graduations du cadran, car pour agir sur la position des écrans, il est nécessaire de désolidariser le couvercle et le boîtier de base.

Le brevet US 4 773 270 divulgue un dispositif indicateur comportant des arcs réglables permettant de signaler des zones de fonctionnement.

Le brevet US 2 501 033 divulgue un dispositif indicateur comportant des secteurs qui peuvent être manoeuvrés à l'aide de poignées pour délimiter des zones de fonctionnement.

US 2 550 033 divulgue une jauge pour mesurer la consommation d'un gaz. La jauge comporte un cadran auxiliaire rotatif et un écran obturateur portés par un arbre fixé au centre d'un couvercle en verre de la jauge. Le cadran auxiliaire rotatif est situé derrière l'écran obturateur et peut être pivoté par rapport à l'écran obturateur lors d'une lecture de la quantité du gaz consommé.

US 1 723 390 divulgue une jauge pour mesurer la précision d'une pièce usinée. La jauge comporte un couvercle fixé sur le cadran. Le couvercle porte deux écrans rotatifs obturateurs montés derrière le couvercle et configurés pour cacher des parties du cadran non utilisées lors de la mesure, afin de rendre la lecture moins fatigante.

Il existe un besoin pour perfectionner encore les dispositifs indicateurs afin notamment de bénéficier d'un dispositif qui permette de signaler au moins une zone de fonctionnement avec une possibilité aisée de réglage de celle-ci, et qui soit de construction fiable et peu coûteuse.

L'invention répond à cet objectif grâce à un dispositif indicateur, notamment manomètre, tel que défini à la revendication 1, comportant :
- un boîtier de base comportant un mécanisme d'entrainement d'une aiguille rotative indicatrice, mobile par rapport à un cadran,
- un boîtier d'interface rapporté sur le boîtier de base,
- au moins un écran rotatif porté par le boîtier d'interface, de repérage d'une zone de fonctionnement, dont la position angulaire autour de l'axe de l'aiguille est ajustable,
- un couvercle de protection fixé de façon amovible sur le boîtier d'interface et permettant, lorsqu'enlevé, de régler la position de l'écran rotatif sans séparer le boîtier d'interface du boîtier de base.

Grâce à l'invention, il est aisé pour l'utilisateur de modifier précisément la position du ou des écrans rotatifs en enlevant le couvercle de protection et en déplaçant manuellement le ou les écrans relativement au cadran. Le réglage du ou des écrans peut s'effectuer en visualisant à la fois l'écran et le cadran, notamment sans risque d'endommagement de l'aiguille ou du mécanisme d'entraînement. Une fois le réglage effectué, le couvercle de protection peut être remis en place sur le boîtier d'interface. L'accès aux réglages du ou des écrans n'est alors pas possible depuis l'extérieur.

La mise en place du boîtier d'interface peut s'effectuer, le cas échéant, alors que le boîtier de base est déjà en place dans son environnement d'utilisation.

De préférence, le dispositif indicateur comporte au moins deux écrans rotatifs superposés, dont les positions angulaires peuvent être ajustées indépendamment l'une de l'autre.

Le boîtier d'interface comporte un axe de maintien sur lequel le ou les écrans rotatifs sont montés.

Le boîtier d'interface comporte un support présentant une base, notamment élargie, permettant de masquer partiellement le ou les écrans rotatifs. Cela permet de réaliser un dispositif indicateur esthétique et très lisible. Le support porte l'axe de maintien précité, celui-ci étant par exemple réalisé d'une seule pièce par moulage avec le support.

De préférence, le dispositif indicateur comporte un écran fixe, porté par le boîtier d'interface, en arrière du ou des écrans rotatifs, le ou les écrans rotatifs étant de préférence maintenus sur le boîtier d'interface par l'écran fixe, ce qui permet un assemblage compact. L'écran fixe et le boîtier d'interface peuvent alors comporter des reliefs coopérants imposant une orientation prédéfinie à l'écran fixe sur le boîtier d'interface, lors du montage. L'axe de maintien précité peut alors être creux et l'écran fixe comporter un picot engagé dans cet axe creux, notamment encliqueté dans celui-ci.

De préférence, le ou les écrans rotatifs portent chacun une plage colorée s'étendant sur un secteur angulaire de moins d'une révolution complète autour de l'axe de rotation de l'aiguille. Cette plage peut être destinée à signaler une plage de fonctionnement anormale et être de couleur rouge par exemple. L'écran fixe éventuel peut comporter une plage colorée s'étendant sur un secteur angulaire autour de l'axe de rotation de l'aiguille, notamment de moins d'une révolution complète, cette plage colorée étant de préférence partiellement masquée par la ou les plages colorées du ou des écrans rotatifs, celles-ci étant de préférence d'une couleur différente. La plage de l'écran fixe est par exemple verte lorsqu'elle est destinée à signaler une plage de fonctionnement normale.

Il est possible de faire bénéficier de l'invention des dispositifs indicateurs ne comportant initialement que le boîtier de base et un couvercle, sans avoir à procéder au remplacement de l'ensemble, donc sans démonter le boîtier de base, évitant ainsi d'interrompre la pression du réseau d'air comprimé dans le cas où le dispositif indicateur est un manomètre installé sur un tél réseau. Dans ce cas, le boîtier d'interface peut se fixer sur le boîtier de base en lieu et place du couvercle.

Le boîtier d'interface et le couvercle peuvent présenter des pattes de fixation positionnées sensiblement de la même façon sur des côtés opposés du boîtier d'interface et du couvercle.

L'invention pourra être mieux comprise à la lecture de la description détaillée qui va suivre, d'un exemple de mise en oeuvre non limitatif de celle-ci, et à l'examen du dessin annexé, sur lequel :
- la figure 1 est une vue en perspective éclatée d'un dispositif indicateur réalisé conformément à l'invention,
- la figure 2 représente le dispositif de la figure 1 selon un autre angle de vue,
- la figure 3 est une vue de face du dispositif, à l'état assemblé,
- la figure 4 représente isolément le boîtier d'interface et les écrans rotatifs,
- la figure 5 est une vue arrière du boîtier d'interface et des écrans de la figure 4,
- la figure 6 est une coupe axiale dans un plan médian, selon VI-VI de la figure 4,
- la figure 7 est une vue éclatée avec demi-coupe axiale du boîtier d'interface et des écrans de la figure 6, et
- la figure 8 est une vue similaire à la figure 6, avant assemblage des écrans sur le boîtier d'interface.

Le dispositif indicateur 1 représenté sur les figures est un manomètre comportant un boîtier de base 2, un boîtier d'interface 5 et un couvercle de protection 7.

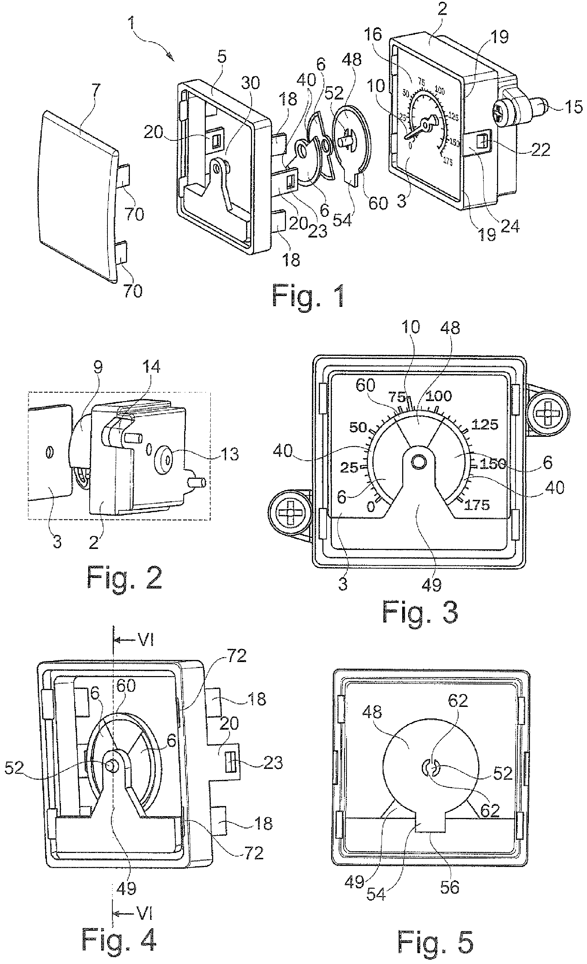

Le boîtier de base 2 loge un mécanisme 9 d'entraînement d'une aiguille 10 indicatrice, mobile en rotation par rapport à un cadran 3 porté par le boîtier de base 2. Ce dernier peut comporter sur sa surface arrière, comme illustré à la figure 2, une connexion 13 permettant une communication étanche avec le fluide dont on cherche à mesurer la pression, et comporter des oreilles de fixation 14 permettant le passage de vis 15 pour le montage du boîtier de base 2 sur un bâti non représenté. Le mécanisme 9 est par exemple de type Bourdon, connu en lui-même.

Le cadran 3 est de préférence gradué, et peut présenter, comme illustré, des graduations 16 qui indiquent la valeur de la pression.

Le boîtier d'interface 5 est configuré pour se fixer sur le boîtier de base 2 et peut comporter à cet effet des pattes de guidage 18 agencées pour s'engager dans des logements correspondants 19 du boîtier de base 2.

Le boîtier d'interface 5 comporte également des pattes de fixation 20, par exemple au nombre de deux sur des côtés latéraux opposés au boîtier d'interface 5, agencées pour s'encliqueter sur des reliefs du boîtier de base 2. Chaque patte de fixation 20 peut comporter, comme illustré, une découpe 23 agencée pour s'encliqueter sur une dent 22 prévue sur le boîtier de base, cette dent pouvant faire saillie dans le fond d'un logement 24 dans lequel s'engage la patte 20.

Dans l'exemple illustré, le boîtier d'interface 5 comporte ainsi deux pattes de fixation 20 sur ses deux côtés latéraux et quatre pattes de guidage 18, les pattes de fixation 20 étant situées chacune entre deux pattes de guidage 18 d'un même côté du boîtier d'interface.

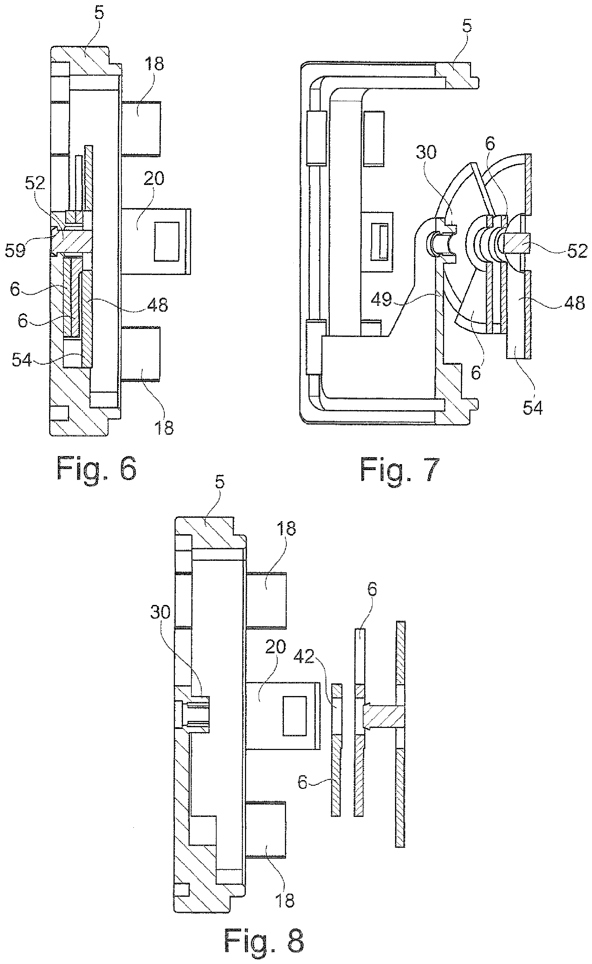

Le boîtier d'interface 5 comporte un axe de maintien 30 sur lequel sont montés, comme on peut le voir plus particulièrement sur les figures 6 à 8, deux écrans rotatifs avant et arrière 6. Chaque écran 6 présente, dans l'exemple illustré, une forme demi-circulaire avec une plage indicatrice colorée 40 qui s'étend ainsi sur 180 degrés. Chaque écran rotatif 6 comporte un perçage central 42 dont le diamètre est choisi de façon à avoir un ajustement étroit sur l'axe de maintien 30, de telle sorte qu'une fois positionnés angulairement par l'opérateur dans la position angulaire voulue, les écrans rotatifs 6 ne bougent plus, mais puissent être réglés à nouveau avec une orientation angulaire différente.

Selon l'invention, le dispositif indicateur 1 comporte également dans l'exemple illustré un écran fixe 48 qui est placé en arrière des écrans rotatifs 6 de façon à les maintenir contre un support 49 de l'axe de maintien 30.

L'écran fixe 48 porte un picot 52 qui est fixé par encliquetage à l'intérieur de l'axe de maintien 30, comme on peut le voir sur la figure 6. Le picot 52 peut comporter une ou plusieurs dents d'encliquetage 59 à cet effet. Le picot 52 peut être relié à l'écran fixe 48 par des pattes 62 diamétralement opposées, ce qui lui confère une certaine flexibilité. L'écran fixe 48 peut comporter une extension 54 à sa base qui est engagée dans une encoche 56 du support 49, ce qui assure le positionnement angulaire de l'écran 48 avec une orientation prédéfinie.

L'écran fixe 48 comporte avantageusement, comme on le voit notamment sur la figure 1, une plage colorée 60 qui s'étend sur moins d'une révolution complète, étant interrompue à proximité de l'extension 54. La plage colorée 60 est par exemple verte et celle 40 de chaque écran rotatif 6 rouge.

Lorsqu'ils sont en place sur le boîtier d'interface, les écrans rotatifs 6 masquent partiellement la plage colorée 60, plus ou moins selon l'orientation angulaire qu'on leur donne, comme on le voit sur la figure 3.

L'aiguille 10 présente une longueur supérieure au rayon des écrans 6 et 48, de façon à apparaître derrière les écrans 6 et 48 au-delà des plages colorées.

Le support 49 masque, comme on peut le voir sur la figure 3, la partie inférieure des écrans 6 et 48, de telle sorte que l'utilisateur ne voit que le bord de chaque écran rotatif 6 adjacent à la plage colorée 60, ce qui évite de nuire à l'esthétique du dispositif indicateur et à sa lisibilité.

Le couvercle 7 comporte des pattes de fixation 70 qui s'engagent dans des logements correspondants 72 du boîtier d'interface. Il est possible de faire évoluer le dispositif indicateur 1 en le proposant dans un premier temps sans boîtier d'interface 5, avec un couvercle existant fixé sur le boîtier de base 2 et dans un deuxième temps avec le boîtier d'interface 5 et le couvercle 7 associé. Le couvercle existant, qui est remplacé par le boîtier d'interface, comporte des pattes de guidage analogues aux pattes 70 et des pattes de fixation analogues aux pattes 20.

Bien entendu, l'invention n'est pas limitée à l'exemple qui vient d'être décrit.

En particulier, l'invention n'est pas limitée à un dispositif indicateur dont le boîtier de base présenterait une forme carrée en vue de face, comme illustré sur la figure 3. La forme du boîtier de base peut ainsi être polygonale autre que carrée ou non polygonale, par exemple circulaire. L'extension 54 peut être supprimée et la plage colorée 60 s'étendre continûment sur 360°.

Dans une variante, le picot 52 est cannelé pour accroître encore la friction avec les écrans rotatifs.

Le nombre d'écrans rotatifs peut varier et par exemple être limité à un. La fixation du boîtier d'interface sur le boîtier de base peut se faire autrement que par encliquetage, et par exemple à l'aide de vis.

Le couvercle 7 peut ou non être séparable du boîtier d'interface 5. Dans l'exemple illustré, le couvercle 7 est séparable mais dans une variante, le couvercle 7 est articulé sur le boîtier d'interface 5, étant soulevé pour accéder aux écrans rotatifs.

Le montage des écrans rotatifs peut s'effectuer encore différemment, ceux-ci étant par exemple moulés avec un fût central engagé dans un perçage du support.

Le mécanisme d'entraînement de l'aiguille contenu dans le boîtier de base peut être autre qu'un mécanisme de manomètre.

L'expression « comportant un » doit se comprendre comme synonyme de « comportant au moins un ».

## Revendications

1. Dispositif indicateur (1), notamment manomètre, comportant :
- un boîtier de base (2) comportant un mécanisme d'entrainement d'une aiguille rotative indicatrice (10), mobile par rapport à un cadran (3),
- un boîtier d'interface (5) rapporté sur le boîtier de base,
- au moins un écran rotatif (6) porté par le boîtier d'interface (5), de repérage d'une zone de fonctionnement, dont la position angulaire autour de l'axe de l'aiguille (10) est ajustable,
- un couvercle de protection (7) fixé de façon amovible sur le boîtier d'interface (5) et permettant, lorsqu'enlevé, de régler la position de l'écran rotatif (6) sans séparer le boîtier d'interface (5) du boîtier de base (2),
**caractérisé en ce que** le boîtier d'interface (5) comportant un axe de maintien (30) sur lequel le ou les écrans rotatifs (6) sont montés et un support (49) portant ledit axe de maintien (30) du ou des écrans rotatifs (6), le support présentant une base, notamment élargie, permettant de masquer partiellement le ou les écrans rotatifs (6).

2. Dispositif selon la revendication 1, comportant au moins deux écrans rotatifs (6) superposés, dont les positions angulaires peuvent être ajustées indépendamment l'une de l'autre.

3. Dispositif selon l'une quelconque des revendications précédentes, comportant un écran fixe (48), porté par le boîtier d'interface (5), en arrière du ou des écrans rotatifs (6), le ou les écrans rotatifs (6) étant de préférence maintenus sur le boîtier d'interface (5) par l'écran fixe (48).

4. Dispositif selon la revendication 3, l'écran fixe (48) et le boîtier d'interface (5) comportant des reliefs coopérants (54, 56) imposant une orientation prédéfinie à l'écran fixe (48) sur le boîtier d'interface (5).

5. Dispositif selon les revendications 1 et 4, l'axe (30) étant creux et l'écran fixe comportant un picot (52) engagé dans cet axe creux.

6. Dispositif selon l'une quelconque des revendications précédentes, le ou les écrans rotatifs (6) portant chacun une plage colorée (40) s'étendant sur un secteur angulaire de moins d'une révolution complète autour de l'axe de rotation de l'aiguille (10).

7. Dispositif selon les revendications 3 et 6, l'écran fixe (48) comportant une plage colorée (60) s'étendant sur un secteur angulaire autour de l'axe de rotation de l'aiguille (10), de 360° ou moins, cette plage colorée (60) étant de préférence partiellement masquée par la ou les plages colorées (40) du ou des écrans rotatifs (6), celles-ci étant de préférence d'une couleur différente.

8. Dispositif selon l'une quelconque des revendications précédentes, le boîtier d'interface (5) et le couvercle (7) comportant des pattes de fixation positionnées sensiblement de la même façon sur des côtés opposés du boîtier d'interface (5) et du couvercle (7).

9. Dispositif selon l'une quelconque des revendications précédentes, l'aiguille (10) présentant une longueur supérieure au rayon des écrans rotatifs (6) et de l'écran fixe (48).

## Patentansprüche

1. Anzeigevorrichtung (1), insbesondere ein Druckmesser, aufweisend:
- ein Grundgehäuse (2), das einen Antriebsmechanismus eines drehbaren Zeigers (10) aufweist, der bezogen auf eine Skala (3) beweglich ist,
- ein Verbindungsgehäuse (5), das auf dem Grundgehäuse angebracht ist,
- mindestens einen Drehschirm (6), der von dem Verbindungsgehäuse (5) getragen wird, zum Erkennen eines Betriebsbereichs, dessen Winkelposition um die Achse des Zeigers (10) einstellbar ist,
- einen Schutzdeckel (7), der abnehmbar an dem Verbindungsgehäuse (5) befestigt ist und es gestattet, wenn er abgenommen ist, die Position des Drehschirms (6) zu verstellen, ohne das Verbindungsgehäuse (5) von dem Grundgehäuse (2) zu trennen,
**dadurch gekennzeichnet, dass**
das Verbindungsgehäuse (5) aufweisend eine Halteachse (30), auf welcher der oder die Drehschirme (6) befestigt sind, und einen Träger (49), der die Halteachse (30) des oder der Drehschirme (6) trägt, aufweist, wobei der Träger eine Basis aufweist, die insbesondere vergrößert ist, die es gestattet, den oder die Drehschirme (6) teilweise zu verdecken.

2. Vorrichtung nach Anspruch 1, aufweisend mindestens zwei übereinander gelagerte Drehschirme (6), deren Winkelpositionen unabhängig voneinander eingestellt werden können.

3. Vorrichtung nach einem der vorhergehenden Ansprüche, aufweisend einen festen Schirm (48), der von dem Verbindungsgehäuse (5) getragen wird, hinter dem oder den Drehschirmen (6), wobei der oder die Drehschirme (6) vorzugsweise von dem festen Schirm (48) auf dem Verbindungsgehäuse (5) gehalten werden.

4. Vorrichtung nach Anspruch 3, wobei der feste Schirm (48) und das Verbindungsgehäuse (5) zusammenwirkende Reliefs (54, 56) aufweisen, die dem festen Schirm (48) auf dem Verbindungsgehäuse (5) eine vorbestimmte Orientierung aufzwingen.

5. Vorrichtung nach den Ansprüchen 1 und 4, wobei die Achse (30) hohl ist und der feste Schirm einen Stift (52) aufweist, der mit dieser Hohlachse in Eingriff steht.

6. Vorrichtung nach einem der vorhergehenden Ansprüche, wobei der oder die Drehschirme (6) jeweils einen farbigen Bereich (40) tragen, der sich auf einem Winkelabschnitt von weniger als einer vollständigen Umdrehung um die Drehachse des Zeigers (10) erstreckt.

7. Vorrichtung nach den Ansprüchen 3 und 6, wobei der feste Schirm (48) einen farbigen Bereich (60) aufweist, der sich auf einem Winkelabschnitt um die Drehachse des Zeigers (10) von 360° oder weniger erstreckt, wobei dieser farbige Bereich (60) vorzugsweise teilweise von dem oder den farbigen Bereichen (40) des oder der Drehschirme (6) verdeckt ist, wobei diese vorzugsweise eine andere Farbe aufweisen.

8. Vorrichtung nach einem der vorhergehenden Ansprüche, wobei das Verbindungsgehäuse (5) und der Deckel (7) Befestigungsansätze aufweist, die im Wesentlichen auf dieselbe Weise an gegenüberliegenden Seiten des Verbindungsgehäuses (5) und des Deckels (7) positioniert sind.

9. Vorrichtung nach einem der vorhergehenden Ansprüche, wobei der Zeiger (10) eine Länge größer als der Radius der Drehschirme (6) und des festen Schirms (48) aufweist.

## Claims

1. An indicating device (1), particularly a pressure gauge, comprising:
- a basic housing (2) comprising a drive mechanism that drives a rotary indicator needle (10) that is mobile relative to a dial (3),
- an interface housing (5) attached to the basic housing,
- at least one rotary screen (6) borne by the interface housing (5), for identifying an operating zone, of which the angular position about the axis of the needle (10) is adjustable,
- a protective cover (7) fixed removably to the interface housing (5) and, when removed, allowing the position of the rotary screen (6) to be adjusted without detaching the interface housing (5) from the basic housing (2), **characterized in that** the interface housing (5) comprising a retaining pin (30) on which the rotary screen or screens (6) are mounted, this support (49) having a base, especially widened, allowing the rotary screen or screens (6) to be partially concealed.

2. The device as claimed in claim 1, comprising at least two superposed rotary screens (6), of which the angular positions may be adjusted independently of one another.

3. The device as claimed in any one of the preceding claims, comprising a fixed screen (48), borne by the interface housing (5), behind the rotary screen or screens (6), the rotary screen or screens (6) preferably being held on the interface housing (5) by the fixed screen (48).

4. The device as claimed in claim 3, the fixed screen (48) and the interface housing (5) comprising interacting reliefs (54, 56) imposing a predefined orientation on the fixed screen (48) on the interface housing (5).

5. The device as claimed in claims 1 and 4, the pin (30) being hollow and the fixed screen comprising a peg (52) engaged in this hollow pin.

6. The device as claimed in any one of the preceding claims, the rotary screen or screens (6) each bearing a colored region (40) extending over an angular sector of less than one complete revolution about the axis of rotation of the needle (10).

7. The device as claimed in claims 3 and 6, the fixed screen (48) comprising a colored region (60) extending over an angular sector about the axis of rotation of the needle (10), of 360° or less, this colored region (60) preferably being partially concealed by the colored region or regions (40) of the rotary screen or screens (6), these preferably being of a different color.

8. The device as claimed in any one of the preceding claims, the interface housing (5) and the cover (7) comprising fixing tabs positioned substantially in the same way on opposite sides of the interface housing (5) and of the cover (7).

9. The device according to any one of the preceding claims, the needle (10) having a length greater than the radius of the rotary screens (6) and of the fixed screen (48).
